# EUROPEAN PATENT SPECIFICATION

(11) **EP 3 713 108 B1**
(45) Date of publication and mention of the grant of the patent: **12.01.2022**
(21) Application number: 19305351.9
(22) Date of filing: 21.03.2019
(51) Int. Cl.: H04B 10/032

(54) **EQUIPMENT FOR LONG RANGE SUBMARINE OPTICAL COMMUNICATION**
AUSRÜSTUNG ZUR OPTISCHEN UNTERWASSERKOMMUNIKATION MIT GROSSER REICHWEITE
ÉQUIPEMENT POUR COMMUNICATION OPTIQUE SOUS-MARINE À LONGUE PORTÉE

(43) Date of publication of application: 23.09.2020
(73) Proprietor: Nokia Solutions and Networks Oy, 02610 Espoo (FI); Alcatel Submarine Networks, 91620 Nozay (FR)
(72) Inventor: CHARLET, Gabriel, 92160 Antony (FR); COURTOIS, Olivier, 91620 La Ville du Bois (FR)
(74) Representative: Croonenbroek, Thomas Jakob

(56) References cited:
- US-A1- 2002 150 042
- US-A1- 2002 167 694

## Description

### TECHNICAL FIELD

The present invention relates to the field of long range underwater optical cables such as transcontinental cables. Such cables are used to transmit information between the different parts of the world to provide global networks such as the Internet.

The present invention deals in particular with the protection of these cables.

### BACKGROUND OF THE INVENTION

Such long range underwater cables lie on the bottom of the oceans and are coupled to two line terminal equipments arranged respectively at each end of the cable to manage the transmission of optical signals. These cables are very important to ensure connections in global networks and any failure preventing transmission along these cables may have a huge impact on global networks. The higher risk of failure is located at the line terminal equipment due to their complexity and at each end of the cables where the cables lie in shallow water due to the risk of damages by human activities such as fishing or coastal engineering that may cut a cable lying on the bottom of the ocean where the water depth remains limited.

US 2002/167694 A1 discloses equipment for transmitting optical signals through a submarine cable, comprising a first plurality of cables lying in shallow water, a single cable lying in deep water, a terrestrial set comprising a first line terminal equipment and a first coupler configured for transmitting optical signals toward a submarine switching unit, the transmission toward the submarine switching unit being achieved via two different paths corresponding to two different cables from the first plurality of cables, and a submarine set comprising the submarine switching unit configured for receiving optical signals via the two different paths corresponding to two different cables from the first plurality of cables and for transmitting the optical signals through the deep water cable.

### SUMMARY OF THE INVENTION

It is therefore a goal of the present invention to provide a solution to protect long range underwater cables from failure occurring close to their ends and in line terminal equipments.

Thus, the example embodiments refer to an equipment for transmitting optical signals through a plurality of submarine cables, the said equipment comprising:
- a first plurality of cables,
- a second plurality of cables,
- a terrestrial set comprising:
   - a first line terminal equipment,
   - a second line terminal equipment,
   - a first coupler linked to the first line terminal equipment through a first optical fiber and configured for transmitting optical signals received from the first line terminal equipment toward at least a first and a second submarine switching units, the transmission toward a submarine switching unit being achieved via at least two different paths corresponding to at least two different cables from the first plurality of cables,
   - a second coupler linked to the first line terminal equipment through a second optical fiber and configured for transmitting optical signals received from the first line terminal equipment toward at least the first and the second submarine switching units, the transmission toward a submarine switching unit being achieved via at least two different paths corresponding to at least two different cables from the first plurality of cables,
   - a third coupler linked to the second line terminal equipment through a third optical fiber and configured for transmitting optical signals received from the second line terminal equipment toward at least the first and the second submarine switching units, the transmission toward a submarine switching unit being achieved via at least two different paths corresponding to at least two cables from the first plurality of cables,
   - a fourth coupler linked to the second line terminal equipment through a fourth optical fiber and configured for transmitting optical signals received from the second line terminal equipment toward at least the first and the second submarine switching units, the transmission toward a submarine switching unit being achieved via at least two different paths corresponding to at least two different cables from the first plurality of cables,
- a submarine set comprising:
   - the first submarine switching unit configured for receiving optical signals from the first and the second line terminal equipments via the at least two different paths corresponding to the at least two different cables from the first plurality of cables and for transmitting optical signals received from at least one cable from the first plurality of cables and from at least one line terminal equipment through at least a first cable from the second plurality of cables ,
   - the second submarine switching unit configured for receiving optical signals from the first and the second line terminal equipments via the at least two different paths corresponding to the at least two different cables from the first plurality of cables and for transmitting optical signals received from at least one cable from the first plurality of cables and from at least one line terminal equipment through at least a second cable from the second plurality of cables.

According to another aspect of the invention, the first and the second submarine switching units are configured for:
- transmitting optical signals received from the second line terminal equipment toward the at least one cable from the second plurality of cables in case of a failure of the first line terminal equipment,
- transmitting optical signals received from the first line terminal equipment toward the at least one cable from the second plurality of cables in case of a failure of the second line terminal equipment,
- transmitting optical signals received from a first cable from the first plurality of cables toward the at least one cable from the second plurality of cables in case of a failure of a second cable from the first plurality of cables,
- transmitting optical signals received from the second cable from the first plurality of cables toward the at least one cable from the second plurality of cables in case of a failure of the first cable from the first plurality of cables.

According to a further aspect of the invention, the first plurality of cables correspond to cables having a length shorter than 370 kms and configured to be arranged in a shallow water region having a depth lower than 2000 meters and located within a 370km range from the shore and the the second plurality of cables corresponds to cables configured to be arranged in deep water region corresponding to a region with a depth higher than 2000 meters and located further away from the shore than the shallow water region.

According to an additional aspect of the invention, the deep water region is located further away than a 50 km range from the shore.

According to another aspect of the invention, the first, the second, the third and the fourth couplers are 3dB couplers.

According to a further aspect of the invention, a first and a second cables from the second plurality of cables are associated with the first submarine switching unit, a third and a fourth cables from the second plurality of cables are associated with the second submarine switching unit, and wherein the first submarine switching unit comprises:
- a first 4 to 1 switch having its output coupled to the first cable from the second plurality of cables,
- a second 4 to 1 switch having its output coupled to the second cable from the second plurality of cables,
- a first coupler coupled to the first coupler of the terrestrial set via a cable from the first plurality of cables associated with a first path and configured for transmitting optical signals received from the terrestrial set toward an input of the first 4 to 1 switch and toward an input of a third 4 to 1 switch of the second submarine switching unit,
- a second coupler coupled to the second coupler of the terrestrial set via a cable from the first plurality of cables associated with the first path and configured for transmitting optical signals received from the terrestrial set toward an input of the second 4 to 1 switch and toward an input of a fourth 4 to 1 switch of the second submarine switching unit,
- a third coupler coupled to the third coupler of the terrestrial set via a cable from the first plurality of cables associated with the first path and configured for transmitting optical signals received from the terrestrial set toward an input of the first 4 to 1 switch and toward an input of the third 4 to 1 switch of the second submarine switching unit,
- a fourth coupler coupled to the fourth coupler of the terrestrial set via a cable from the first plurality of cables associated with the first path and configured for transmitting optical signals received from the terrestrial set toward an input of the second 4 to 1 switch and toward an input of a fourth 4 to 1 switch of the second submarine switching unit,
and wherein the second submarine switching unit comprises:
- the third 4 to 1 switch having its output coupled to the third cable from the second plurality of cables,
- the fourth 4 to 1 switch having its output coupled to the fourth cable from the second plurality of cables,
- a first coupler coupled to the first coupler of the terrestrial set via a cable from the first plurality of cables associated with a second path and configured for transmitting optical signals received from the terrestrial set toward an input of the third 4 to 1 switch and toward an input of a first 4 to 1 switch of the first submarine switching unit,
- a second coupler coupled to the second coupler of the terrestrial set via a cable from the first plurality of cables associated with the second path and configured for transmitting optical signals received from the terrestrial set toward an input of the fourth 4 to 1 switch and toward an input of a second 4 to 1 switch of the first submarine switching unit,
- a third coupler coupled to the third coupler of the terrestrial set via a cable from the first plurality of cables associated with the second path and configured for transmitting optical signals received from the terrestrial set toward an input of the third 4 to 1 switch and toward an input of a first 4 to 1 switch of the first submarine switching unit,
- a fourth coupler coupled to the fourth coupler of the terrestrial set via a cable from the second plurality of cables associated with the second path and configured for transmitting optical signals received from the terrestrial set toward an input of the fourth 4 to 1 switch and toward an input of a second 4 to 1 switch of the first submarine switching unit.

According to an additional aspect of the invention, the couplers of the first and second submarine switching units are 3dB couplers.

According to another aspect of the invention, the submarine set comprises additional submarine switching units associated with respective additional cables from the second plurality of cables and wherein the first and the second submarine switching units are also configured for forwarding signals received from the terrestrial set toward at least one additional submarine switching unit, the additional submarine switching units being configured for receiving optical signals from at least another submarine switching unit, forwarding the received signals toward at least another submarine switching unit and for transmitting at least a part of the received signals toward the associated additional cable from the second plurality of cables.

According to a further aspect of the invention, the terrestrial set also comprises:
- a first 2 to 1 switch linked to the first line terminal equipment for transmitting optical signals toward the said first line terminal equipment,
- a second 2 to 1 switch linked to the first line terminal equipment for transmitting optical signals toward the said first line terminal equipment,
- a third 2 to 1 switch linked to the second line terminal equipment for transmitting optical signals toward the said second line terminal equipment,
- a fourth 2 to 1 switch linked to the second line terminal equipment for transmitting optical signals toward the said second line terminal equipment,
and wherein the submarine set also comprises:
- a first additional coupler associated with the first submarine switching unit and configured for transmitting optical signals received from the at least one first cable from the second plurality of cables toward the first and the second line terminal equipments via two different cables from the first plurality of cables having two different paths,
- a second additional coupler associated with the second submarine switching unit and configured for transmitting optical signals received from at least one second cable from the second plurality of cables toward the first and the second line terminal equipments via two different cables from the first plurality of cables having two different paths.

According to a further aspect of the invention, the first and the second additional couplers (OC1...OC4) of the submarine set are 6 dB couplers.

### BRIEF DESCRIPTION OF THE DRAWINGS

FIG.1 is a diagram of a first embodiment of an equipment according to the present invention for the transmission of optical signals from line terminal equipments toward long range cables;
FIG.2 is a diagram of an equipment according to the present invention for the transmission of optical signals from long range cables to line terminal equipments associated with the embodiment of fig. 1;
FIG.3 is a diagram of a second embodiment of an equipment according to the present invention for the transmission of optical signals from line terminal equipments toward long range cables;
FIG.4 is a diagram of a third embodiment of an equipment according to the present invention for the transmission of optical signals from line terminal equipments toward long range cables;
FIG.5 is a diagram of a fourth embodiment of an equipment according to the present invention for the transmission of optical signals from line terminal equipments toward long range cables;
FIG.6 is a diagram of an equipment according to the present invention for the transmission of optical signals from long range cables to line terminal equipments associated with the embodiment of fig.5;

### DETAILED DESCRIPTION OF THE INVENTION

The following achievements are examples. Although, the specification refers to one or several embodiments, it does not imply that each reference refers to the same embodiment or that the features apply only to a single embodiment. Simple features of different embodiments can also be combined to provide other embodiments.

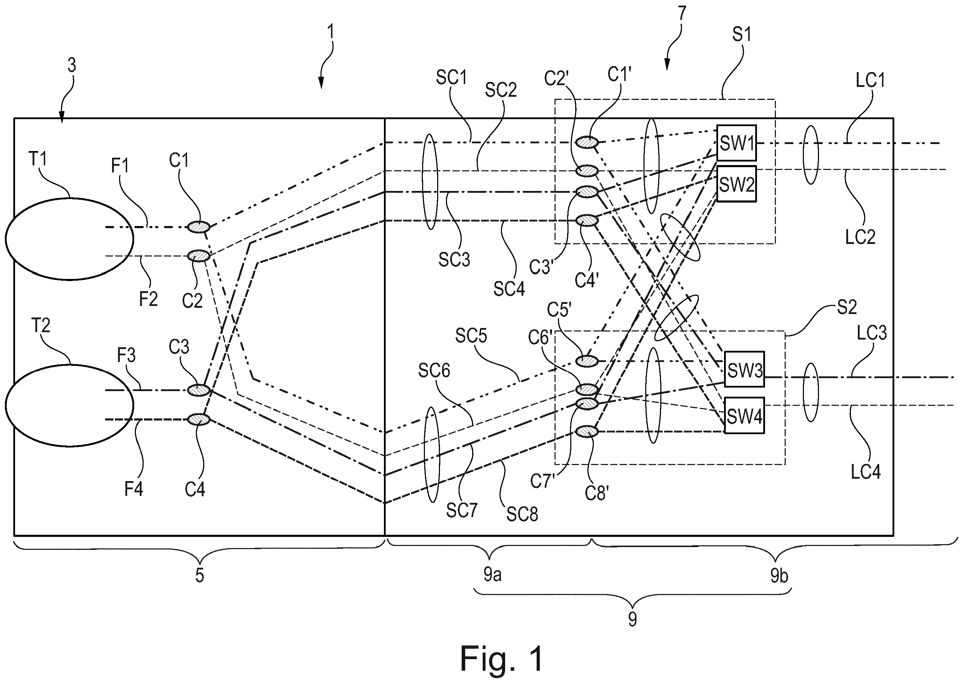

Fig.1 represents an equipment 1 for transmitting optical signals through a plurality of submarine cables according to a first embodiment.

The equipment 1 comprises a first plurality of cables, eight in the present case noted SC1, SC2...SC8 arranged in shallow water, for example in range of 370 kilometers from the shores and with a water depth lower than 2000 meters. The first plurality of cables refers herein to a set of short range cables noted SC1...SC16.

The equipment 1 also comprises a second plurality of cables, four in the present case noted LC1, LC2, LC3, LC4 and configured to be layed down in deep water areas to wire remote equipments to ensure oversea or intercontinental connections. The deep water areas correspond to areas wherein no fishing equipment comes in contact with the bottom of the ocean, for example areas having a water depth higher than 2000 meters, for example between 2000 and 8000 m. It may correspond for example to international waters. The second plurality of cables refers herein to a set of long range cables noted LC1...LC4'.

The equipment 1 also comprises a terrestrial set 3 located on land or ground 5 and comprising a first line terminal equipment T1 (also called submarine line terminal equipment) and a second line terminal equipment T2.

The line terminal equipments T1 and T2 refer to equipment configured for transmitting signals from and to earth routers and for managing the optical signals exchanged between the earth routers and the submarine cables. The line terminal equipments T1, T2 comprise for example laser sources, processing means such as microprocessor or microcontrollers...

The first T1 and the second T2 line terminal equipments may be located in two different places, for example spaced apart of 10 to 30 kilometers.

The terrestrial set 3 also comprises a first coupler C1 linked to the first line terminal equipment T1 through a first optical fiber F1, a second coupler C2 linked to the first line terminal equipment T1 through a second optical fiber F2, a third coupler C3 linked to the second line terminal equipment T2 through a third optical fiber F3, a fourth coupler C4 linked to the second line terminal equipment T2 through a fourth optical fiber F4. The first and the second couplers C1 and C2 may be located next to the first line terminal equipment T1 and the third and fourth couplers C3 and C4 may be located next to the second line terminal equipment T2. The couplers C1 to C4 may be 3dB couplers.

The equipment 1 also comprises a submarine set 7 located underwater in the ocean 9. The submarine set 7 is located in a deep water area 9b, that is to say an area wherein the depth is high enough to prevent damages from fishing equipment, for example areas wherein the water depth is higher than 2000 meters. The deep water area 9b may correspond to an international waters area and may be located further away from the shore than a range from 50 to 370 kilometers from the shore.

The submarine set 7 comprises a first submarine switching unit S1 coupled to at least one long range cable, two long range cables LC1 and LC2 in the present case, and a second submarine switching unit S2 coupled to at least one long range cable, two long range cables LC3 and LC4 in the present case.

The first submarine switching unit S1 is linked to the first and the second couplers C1 and C2 of the terrestrial set 3 via respectively a first and a second short range cable SC1 and SC2. The first submarine switching unit S1 is also linked to the third and the fourth couplers C3 and C4 of the terrestrial set 3 via respectively a third and a fourth short range cable SC3 and SC4.

The second submarine switching unit S2 is linked to the first and the second couplers C1 and C2 of the terrestrial set 3 via respectively a fifth and a sixth short range cable SC5 and SC6. The second submarine switching unit S2 is also linked to the third and the fourth couplers C3 and C4 of the terrestrial set 3 via respectively a seventh and an eighth short range cable SC7 and SC8.

The first submarine switching unit S1 is also configured for routing the optical signals received from the terrestrial set 3 toward the second submarine switching unit S2 and the second submarine switching unit S2 is also configured for routing the optical signals received from the terrestrial set 3 toward the first submarine switching unit S1.

Furthermore, the first SC1, second SC2, third SC3 and fourth SC4 short range cables are arranged between the first submarine switching unit S1 and the terrestrial set 3 along a first path whereas the fifth SC5, sixth SC6, seventh SC7 and eighth SC8 short range cables are arranged between the second unit S2 and the terrestrial set 3 along a second path different from the first path.

Thus, each of the coupler C1...C4 is configured to transmit optical signals toward the first submarine switching unit S1 via the first path along one of the short range cable SC1 to SC4 and toward the second submarine switching unit S2 via the second path along one of the short range cable SC5 to SC8. In practise, the short range cables SC1 to SC4 along the first path may be gathered in a single cable housing and the short range cables SC5 to SC8 along the second path may be gathered in another single cable housing.

Furthermore, the first submarine switching unit S1 is configured for transmitting optical signals received from the first or the second line terminal equipment T1 or T2 via the first path and for transmitting the received optical signals toward the first or the second long range cables LC1 or LC2 and toward the second submarine switching unit S2. The second submarine switching unit S2 is configured for transmitting optical signals received from the first or the second line terminal equipment T1 or T2 via the second path and for transmitting the received optical signals toward the third or the fourth long range cables LC3 or LC4 and toward the first submarine switching unit S1.

The first submarine switching unit S1 may comprise four couplers C1', C2', C3' and C4' coupled respectively to the four short range cable SC1 to SC4 associated with the first path and configured to transmit the received optical signals from the short range cables SC1 to SC4 toward a long range cable LC1 or LC2 associated with the first submarine switching unit S1 or toward a long range cable LC3 or LC4 associated with the second submarine switching unit S2.

The second submarine switching unit S2 may comprise four couplers C5', C6', C7' and C7' coupled respectively to the four short range cable SC5 to SC8 associated with the second path and configured to transmit the received optical signals from the short range cables SC5 to SC8 toward a long range cable LC3 or LC4 associated with the second submarine switching unit S2 or toward a long range cable LC1 or LC2 associated with the first submarine switching unit S1.

The first submarine switching unit S1 may comprise a first 4 to 1 switch SW1 having its inputs linked respectively to the couplers C1' and C3' of the first submarine switching unit S1 and the couplers C5' and C7' of the second submarine switching unit S2 and its output coupled to the first long range cable LC1 and a second 4 to 1 switch SW2 having its inputs linked respectively to the couplers C2' and C4' of the first submarine switching unit S1 and the couplers C6' and C8' of the second submarine switching unit S2 and its output coupled to the second long range cable LC2.

The second submarine switching unit S2 may comprise a third 4 to 1 switch SW3 having its inputs linked respectively to the couplers C1' and C3' of the first submarine switching unit S1 and the couplers C5' and C7' of the second submarine switching unit S2 and its output coupled to the third long range cable LC3 and a fourth 4 to 1 switch SW4 having its inputs linked respectively to the couplers C2' and C4' of the first submarine switching unit S1 and the couplers C6' and C8' of the second submarine switching unit S2 and its output coupled to the fourth long range cable LC4.

Thus, with the configuration represented in Fig.1, any signals transmitted by the first or the second line terminal equipment T1 or T2 can be transmitted toward one of the long range cables LC1, LC2, LC3 and LC4 via a short range cable SC1...SC4 of the first path and via a short range cable of the second path SC5...SC8.

The equipment 1 is therefore configured, in case of a failure on one of the short range cable SC1 to SC4 associated with the first path to transmit the signals transmitted via the short range cables SC5 to SC8 associated with the second path toward the long range cables LC1 to LC4 and in case of a failure on one of the short range cable SC5 to SC8 associated with the second path to transmit the signals transmitted via the short range cables SC1 to SC4 associated with the second path toward the long range cables LC1 to LC4.

The equipment 1 is also configured in case of a failure of the first line terminal equipment T1 to transmit the optical signals affected by the failure by the second line terminal equipment T2 and in case of a failure of the second line terminal equipment T2 to transmit the optical signals affected by the failure by the first line terminal equipment T1. The reconfiguration is achieved at the first and the second line terminal equipments T1 and T2 as well as the 4 to 1 switches SW1 to SW4 of the first and the second submarine switching units S1 and S2.

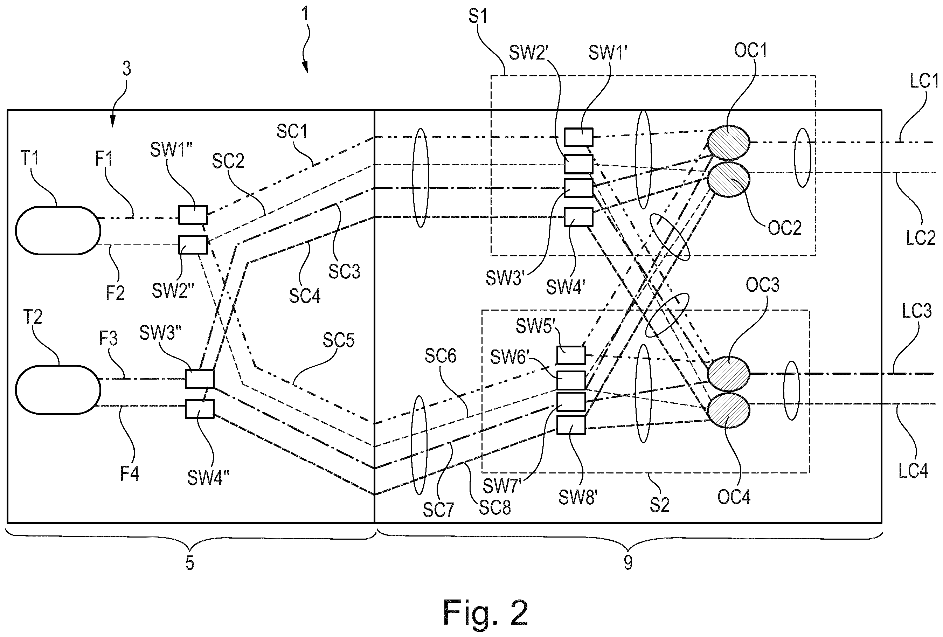

Fig.2 represents an architecture of the equipment 1 for the optical signals transmitted in the opposite direction, that is to say from the long range cables LC1 to LC4 toward the first and the second line terminal equipments T1 and T2. It has to be noted that the different short range cables SC1...SC8 and long range cables LC1...LC4 may comprise a plurality of optical fibers to ensure transmission of the optical signals in both directions. Alternatively, bidirectional optical fibers may also be used.

The first submarine switching unit S1 comprises a first additional coupler OC1 associated with the first long range cable LC1, a second additional coupler OC2 associated with the second long range cable LC2 and four 2 to 1 switches SW1', SW2', SW3' and SW4' coupled respectively the short range cables SC1 to SC4. The first and the second additional couplers OC1 and OC2 may be paired respectively to the first and second switches SW1 and SW2 and the four switches SW1' to SW4' may be paired respectively to the couplers C1', C2', C3' and C4' represented in fig.1. The term paired has to be understood herein as the fact that the paired devices may be arranged in a single unit.

The second submarine switching unit S2 comprises a third additional coupler OC3 associated with the third long range cable LC3, a fourth additional coupler OC4 associated with the fourth long range cable LC4 and four 2 to 1 switches SW5', SW6', SW7' and SW8' coupled respectively to the short range cable SC5 to SC8. The third and the fourth additional couplers OC3 and OC4 may be paired respectively to the third and fourth switches SW3 and SW4 and the four switches SW5' to SW8' may be paired respectively to the couplers C5', C6', C7' and C8' represented in fig.1.

The terrestrial set 3 comprises:
- a first 2 to 1 switch SW1" having its inputs linked to the first and the fifth short range cables SC1 and SC5 and its output linked to the first line terminal equipment T1 via the first optical fiber F1, the first 2 to 1 switch SW1" may be paired with the first coupler C1 represented in fig.1,
- a second 2 to 1 switch SW2" having its inputs linked to the second and the sixth short range cables SC2 and SC6 and its output linked to the first line terminal equipment T1 via the second optical fiber F2, the second 2 to 1 switch SW2" may be paired with the second coupler C2 represented in fig.1,
- a third 2 to 1 switch SW3" having its inputs linked to the third and the seventh short range cables SC3 and SC7 and its output linked to the second line terminal equipment T2 via the third optical fiber F3, the third 2 to 1 switch SW3" may be paired with the third coupler C3 represented in fig. 1,
- a fourth 2 to 1 switch SW4" having its inputs linked to the fourth and the eighth short range cables SC4 and SC8 and its output linked to the second line terminal equipment T2 via the fourth optical fiber F4, the fourth 2 to 1 switch SW4" may be paired with the fourth coupler C4 represented in fig. 1.

In case of failure of the first line terminal equipment T1, the equipment 1 is configured to reconfigure the different 2 to 1 switches SW1'...SW4" of the submarine set 7 and the terrestrial set 3 to route the different optical signals received from the long range cables LC1 to LC4 toward the second line terminal equipment T2.

In case of failure of the second line terminal equipment T2, the equipment 1 is configured to reconfigure the different 2 to 1 switches SW1'...SW4" of the submarine set 7 and the terrestrial set 3 to route the different optical signals received from the long range cables LC1 to LC4 toward the first line terminal equipment T1.

It has to be noted that in case of a line terminal equipment T1 or T2 failure, half of the transmission capacity is lost.

In case of failure of a short range cable SC1 to SC4 associated with the first path, the equipment 1 is configured to reconfigure the different 2 to 1 switches SW1'...SW4" of the submarine set 7 and the terrestrial set 3 to route the different optical signals received from the long range cables LC1 to LC4 toward the short range cables SC5 to SC8 associated with the second path.

In case of failure of a short range cable SC5 to SC8 associated with the second path, the equipment 1 is configured to reconfigure the different 2 to 1 switches SW1'...SW4" of the submarine set 7 and the terrestrial set 3 to route the different optical signals received from the long range cables LC1 to LC4 toward the short range cables SC1 to SC4 associated with the first path.

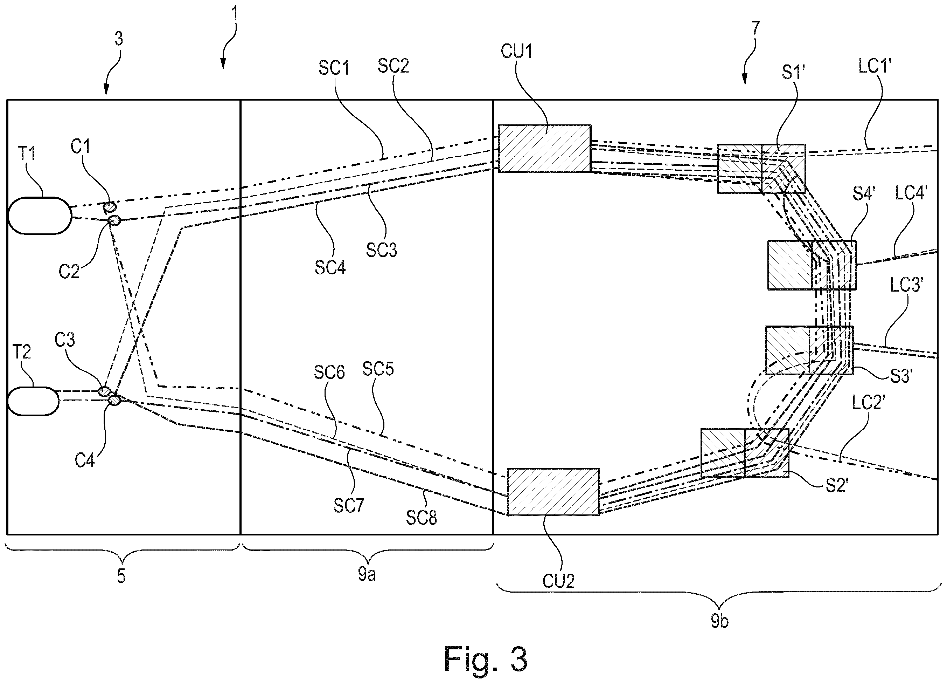

A submarine set 7 with a higher number of submarine switching units may be linked to the first and second line terminal equipment T1 and T2 of the terrestrial set 3 as represented in the embodiment of Fig.3 with four submarine switching unit noted S1', S2', S3' and S4' associated respectively with four long range cables LC1, LC2, LC3 and LC4. Only the differences from the embodiment of Fig.1 will be described.

In Fig.3, the submarine set 3 comprises a first coupling unit CU1 linked to the short range cables SC1 to SC4 of the first path and a second coupling unit CU2 linked to the short range cables SC5 to SC8 of the second path. In fig.3, the first and second coupling units CU1 and CU2 are independent units but in practice, the first coupling unit CU1 may be gathered with the first submarine switching unit S1' in a single device and the second coupling unit CU2 may be gathered with the second submarine switching unit S2'.

The first coupling unit CU1 is configured for transmitting the optical signals received from the short range cables SC1 to SC4 associated with the first path toward the submarine switching units S1'...S4' and the second coupling unit CU2 is configured for transmitting the optical signals received from the short range cables SC5 to SC8 associated with the second path toward the submarine switching units S1'...S4'.

The submarine switching units S1'...S4' are configured for receiving the optical signals transmitted from the first and the second coupling units CU1 and CU2, for transmitting at least one of the received signals toward the associated long range cable LC1...LC4 and for forwarded the received signals toward the other submarine switching units. Alternatively, instead of forwarding all the signals transmitted by the first and second coupling units CU1 and CU2 through the different submarine switching units. It is also possible to forward, directly to a submarine switching unit S1'...S4', only the optical signals that are destined to a long range cable associated to this submarine switching unit S1'...S4'.

The different submarine switching units S1'...S4' are configured to select one of the received optical signals and for transmitting the selected optical signal toward the associated long range cable LC1'...LC4'.

Thus, in case of a failure of at least one of the short range cables SC1...SC4 of the first path, the equipment 1 is configured for reconfiguring the submarine switching units S1'...S4' to select the signals received from the second coupling unit CU2 and in case of a failure of one of the short range cables SC5...SC8 of the second path, the equipment 1 is configured for reconfiguring the submarine switching units S1'...S4' to select the signals received from the first coupling unit CU1.

Furthermore, in case of a failure of the first line terminal equipment T1, the equipment 1 is configured for reconfiguring the second line terminal equipment T2 for transmitting the optical signals previously transmitted by the first line terminal equipment T1 and for reconfiguring the submarine switching units S1'...S4' to select the signals received from the second line terminal equipment T2 and in case of a failure of the second line terminal equipment T2, the equipment 1 is configured for reconfiguring the first line terminal equipment T1 for transmitting the optical signals previously transmitted by the second line terminal equipment T2 and for reconfiguring the submarine switching units S1'...S4' to select the signals received from the first line terminal equipment T1.

It has to be noted that in case of a line terminal equipment T1 or T2 failure, half of the transmission capacity is lost.

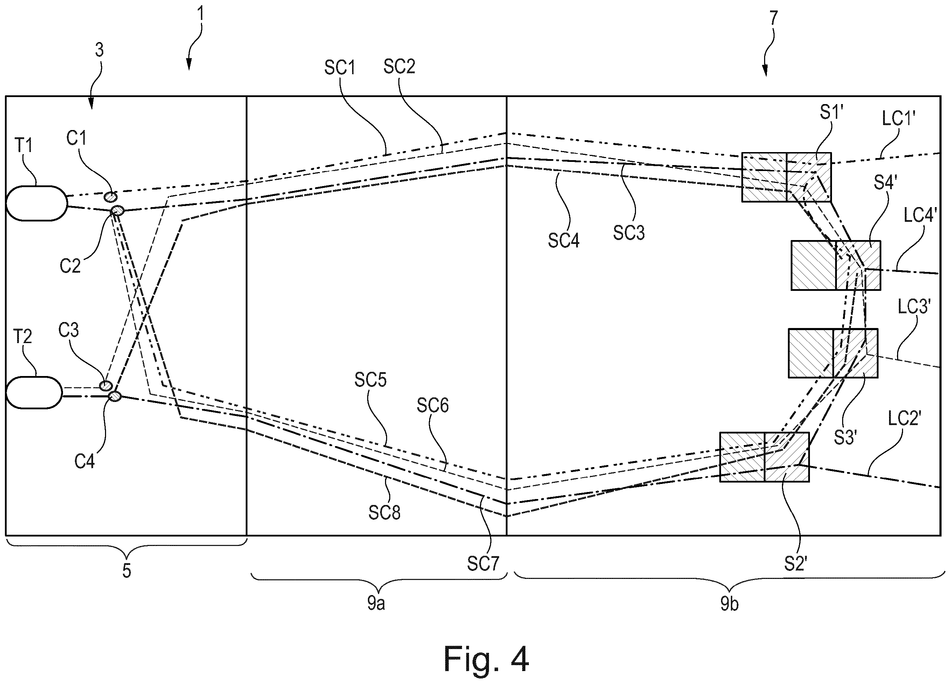

Fig.4 represents another embodiment of a simplified version of the embodiment presented in Fig.3 wherein only the protection of the short range cables SC1...SC8 is ensured. Such embodiment may be interesting if no protection of the line terminal equipments T1 or T2 is required.

This embodiment differs from the previous embodiment of fig.3 by the absence of coupling units CU1 and CU2. Indeed the optical signals transmitted from the first and the second line terminal equipment T1 and T2 are transmitted via the couplers C1...C4 and the short range cables SC1...SC8 toward all the submarine switching units S1'...S4' without need for coupling units.

In case of a failure of at least one of the short range cables SC1...SC4 of the first path, the equipment 1 is configured for reconfiguring the submarine switching units S1'...S4' to select the optical signals received from the short range cables SC5...SC8 of the second path and in case of a failure of one of the short range cables SC5...SC8 of the second path, the equipment 1 is configured for reconfiguring the submarine switching units S1'...S4' to select the optical signals received from the short range cables SC1...SC4 of the first path.

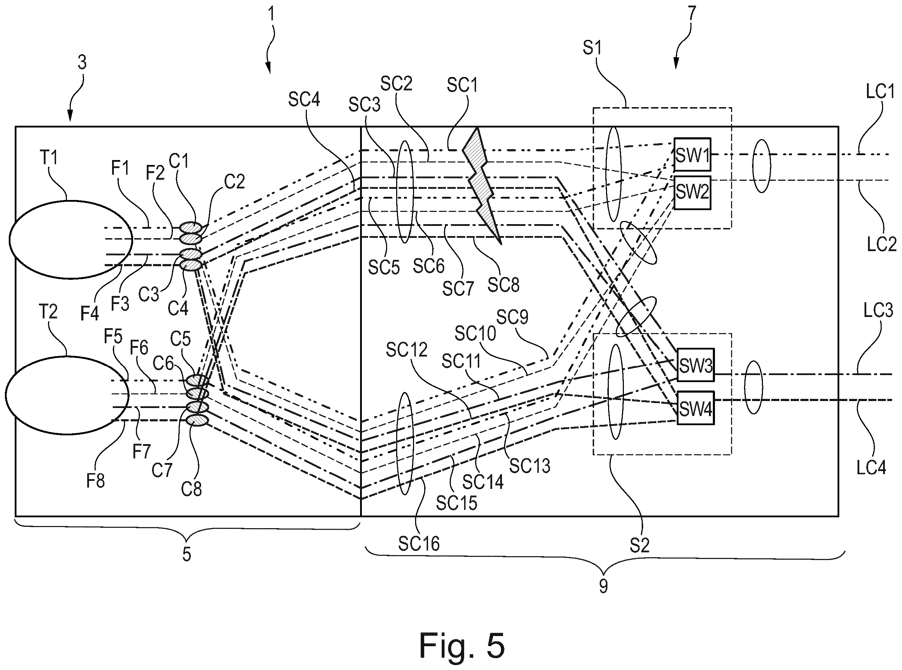

Fig.5 represents another embodiment to avoid the loss of capacity in case of a failure of a line terminal equipment T1 or T2. This embodiment differs from the embodiment of fig.1 by the doubling of couplers and optical fibers of the terrestrial set 3, the doubling of the short range cables and the doubling of the couplers of the submarine set 7.

The terrestrial set 3 comprises a first line terminal equipment T1, four couplers C1, C2, C3 and C4 coupled respectively to the first line terminal equipment T1 via four optical fibers F1, F2, F3 and F4.

The terrestrial set 3 also comprises a second line terminal equipment T2, four couplers C5, C6, C7 and C8 coupled respectively to the second line terminal equipment T2 via four optical fibers F5, F6, F7 and F8.

The submarine set 7 comprises a first 4 to 1 switch SW1 associated with a first long range cable LC1, a second 4 to 1 switch SW2 associated with a second long range cable LC2, a third 4 to 1 switch SW3 associated with a third long range cable LC3, a fourth 4 to 1 switch SW4 associated with a fourth long range cable LC4. The first and second 4 to 1 switches SW1 and SW2 may be arranged in a first submarine switching unit and the third and fourth 4 to 1 switches SW3 and SW4 may be arranged in a second submarine switching unit S2.

The equipment 1 also comprises four short range cables SC1, SC2, SC3, SC4 of the first path linked on one end to the four optical couplers C1...C4 associated with the first line terminal equipment T1 and on the other end respectively to the four 4 to 1 switches SW1...SW4, four short range cables SC5, SC6, SC7, SC8 of the first path linked on one end to the four optical couplers C5...C8 associated with the second line terminal equipment T2 and on the other end respectively to the four 4 to 1 switches SW1...SW4, four short range cables SC9, SC10, SC11, SC12 of the second path linked on one end to the four optical couplers C1...C4 associated with the first line terminal equipment T1 and on the other end respectively to the four 4 to 1 switches SW1...SW4 and four short range cables SC13, SC14, SC15, SC16 of the second path linked on one end to the four optical couplers C5...C8 associated with the second line terminal equipment T2 and on the other end respectively to the four 4 to 1 switches SW1...SW4.

In case of a failure of at least one of the short range cables SC1...SC8 of the first path, the equipment 1 is configured for reconfiguring the switches SW1...SW4 to select the optical signals received from the short range cables SC9...SC16 of the second path and in case of a failure of one of the short range cables SC9...SC16 of the second path, the equipment 1 is configured for reconfiguring the switches SW1...SW4 to select the optical signals received from the short range cables SC1...SC8 of the first path.

Furthermore, in case of a failure of the first line terminal equipment T1, the equipment 1 is configured for reconfiguring the second line terminal equipment T2 for transmitting the optical signals previously transmitted by the first line terminal equipment T1 and for reconfiguring the switches SW1...SW4 to select the signals received from the second line terminal equipment T2 and in case of a failure of the second line terminal equipment T2, the equipment 1 is configured for reconfiguring the first line terminal equipment T1 for transmitting the optical signals previously transmitted by the second line terminal equipment T2 and for reconfiguring the switches SW1...SW4 to select the signals received from the first line terminal equipment T1.

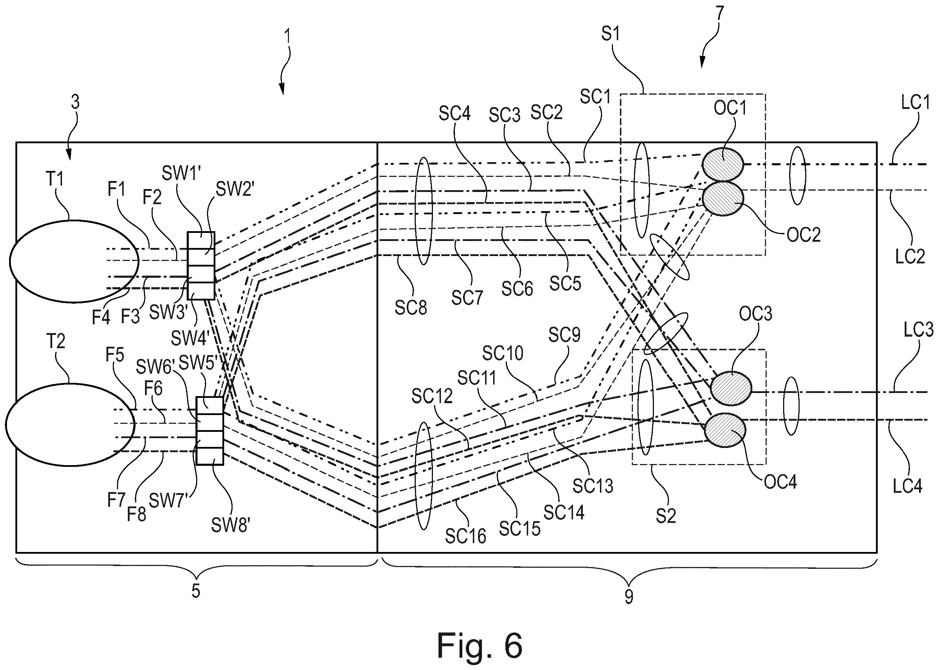

Fig.6 represents the configuration associated with the architecture of Fig.5 for the optical signals transmitted in the opposite direction, that is to say, from the long range cables LC1...LC4 to the line terminal equipments T1 and T2.

In Fig.6, the submarine set 7 comprises on one side a first additional coupler OC1 coupled to the first long range cable LC1 and a second additional coupler OC2 coupled to the second long range cable LC2 which may be arranged in the first submarine switching unit S1 and on the other side, a third additional coupler OC3 coupled to the third long range cable LC3 and a fourth additional coupler OC4 coupled to the fourth long range cable LC4 which can be arranged in the second submarine switching unit S2. The additional couplers OC1...OC4 may be 6 dB couplers.

The terrestrial set 3 comprises a first 2 to 1 switch SW1' having its output linked to the first line terminal equipment T1 via the first optical fiber F1, its first input coupled to a short range optical fiber SC1 of the first path and its second output coupled to the short range cable SC9 of the second path, a second 2 to 1 switch SW2' having its output linked to the first line terminal equipment T1 via the second optical fiber F2, its first input coupled to a short range optical fiber SC2 of the first path and its second output coupled to the short range cable SC10 of the second path, a third 2 to 1 switch SW3' having its output linked to the first line terminal equipment T1 via the third optical fiber F3, its first input coupled to a short range optical fiber SC3 of the first path and its second output coupled to the short range cable SC11 of the second path, a fourth 2 to 1 switch SW4' having its output linked to the first line terminal equipment T1 via the fourth optical fiber F4, its first input coupled to a short range optical fiber SC4 of the first path and its second output coupled to the short range cable SC12 of the second path, a fifth 2 to 1 switch SW5' having its output linked to the second line terminal equipment T2 via the fifth optical fiber F5, its first input coupled to a short range optical fiber SC5 of the first path and its second output coupled to the short range cable SC13 of the second path, a sixth 2 to 1 switch SW6' having its output linked to the second line terminal equipment T2 via the sixth optical fiber F6, its first input coupled to a short range optical fiber SC6 of the first path and its second output coupled to the short range cable SC14 of the second path, a seventh 2 to 1 switch SW7' having its output linked to the second line terminal equipment T2 via the seventh optical fiber F7, its first input coupled to a short range optical fiber SC7 of the first path and its second output coupled to the short range cable SC15 of the second path, an eighth 2 to 1 switch SW8' having its output linked to the second line terminal equipment T2 via the eighth optical fiber F8, its first input coupled to a short range optical fiber SC8 of the first path and its second output coupled to the short range cable SC16 of the second path.

In case of a failure of at least one of the short range cables SC1...SC8 of the first path, the equipment 1 is configured for reconfiguring the switches SW1'...SW8' to select the optical signals received from the short range cables SC9...SC16 of the second path and in case of a failure of one of the short range cables SC9...SC16 of the second path, the equipment 1 is configured for reconfiguring the switches SW1'...SW8' to select the optical signals received from the short range cables SC1...SC8 of the first path.

Furthermore, in case of a failure of the first line terminal equipment T1, the equipment 1 can still process the optical signals received from the long range cables LC1...LC4 by the second line terminal equipment T2 and in case of a failure of the second line terminal equipment T2, the equipment 1 can still process the optical signals received from the long range cables LC1...LC4 by the first line terminal equipment T1.

The 2 to 1 switches SW1'...SW8' may be paired respectively with the eight couplers C1...C8 of the terrestrial set 3 represented in Fig.5 and the four additional couplers OC1...OC4 may be paired respectively with the four 4 to 1 switches SW1...SW4 of the submarine set 7 represented in fig.5.

The present invention is not limited to the number of submarine switching units or long range cables of the second plurality disclosed in the described embodiments. It is also possible to apply the present invention to an equipment comprising more than two line terminal equipments with multiple shared short range cable paths between the different line terminal equipments to ensure protection in case of a failure occurring on a short range cable.

Thus, the present invention enables ensuring protection of the cable damage in shallow water area due to the use of short range cable to connect the long range cables to the line terminal equipment and the use of multiple shared short range cable having at least two different paths. These configurations may also allow ensuring protection of line terminal equipment possibly with a reduction of capacity. Such protection is ensured with a cost that is reduced with respect to the use of an additional spare equipment. Furthermore, the use of short range cable enables easing the fixing of the damaged cables.

Furthermore, as protection is ensured without doubling the number of long range cables, the present invention enables speeding up the development of new long range connections as the setting up of such cables may be long and cumbersome.

## Claims

1. Equipment (1) for transmitting optical signals through a plurality of submarine cables (LC1...LC4), the said equipment (1) comprising:
- a first plurality of cables (SC1... SC16),
- a second plurality of cables (LC1...LC4, LC1'...LC4'),
- a terrestrial set (3) comprising:
- a first line terminal equipment (T1),
- a second line terminal equipment (T2),
- a first coupler (C1) linked to the first line terminal equipment (T1) through a first optical fiber (F1) and configured for transmitting optical signals received from the first line terminal equipment (T1) toward at least a first and a second submarine switching units (S1, S2), the transmission toward a submarine switching unit (S1, S2) being achieved via at least two different paths corresponding to at least two different cables from the first plurality of cables (SC1...SC16),
- a second coupler (C2) linked to the first line terminal equipment (T1) through a second optical fiber (F2) and configured for transmitting optical signals received from the first line terminal equipment (T1) toward at least the first and the second submarine switching units (S1, S2), the transmission toward a submarine switching unit (S1, S2) being achieved via at least two different paths corresponding to at least two different cables from the first plurality of cables (SC1...SC16),
- a third coupler (C3) linked to the second line terminal equipment (T2) through a third optical fiber (F3) and configured for transmitting optical signals received from the second line terminal equipment (T2) toward at least the first and the second submarine switching units (S1, S2), the transmission toward a submarine switching unit (S1, S2) being achieved via at least two different paths corresponding to at least two cables from the first plurality of cables (SC1...SC16),
- a fourth coupler (C4) linked to the second line terminal equipment (T2) through a fourth optical fiber (F4) and configured for transmitting optical signals received from the second line terminal equipment (T2) toward at least the first and the second submarine switching units (S1, S2), the transmission toward a submarine switching unit (S1, S2) being achieved via at least two different paths corresponding to at least two different cables from the first plurality of cables (SC1...SC16),
- a submarine set (7) comprising:
- the first submarine switching unit (S1, S1') configured for receiving optical signals from the first and the second line terminal equipments (T1, T2) via the at least two different paths corresponding to the at least two different cables from the first plurality of cables (SC1...SC16) and for transmitting optical signals received from at least one cable from the first plurality of cables (SC1...SC16) and from at least one line terminal equipment (T1, T2) through at least a first cable from the second plurality of cables (LC1...LC4),
- the second submarine switching unit (S2, S2') configured for receiving optical signals from the first and the second line terminal equipments (T1, T2) via the at least two different paths corresponding to the at least two different cables from the first plurality of cables (SC1...SC16) and for transmitting optical signals received from at least one cable from the first plurality of cables (SC1...SC16) and from at least one line terminal equipment (T1, T2) through at least a second cable from the second plurality of cables (LC1...LC4).

2. Equipment (1) in accordance with claim 1 wherein the first and the second submarine switching units (S1 and S2) are configured for:
- transmitting optical signals received from the second line terminal equipment (T2) toward the at least one cable from the second plurality of cables (LC1...LC4) in case of a failure of the first line terminal equipment (T1),
- transmitting optical signals received from the first line terminal equipment (T1) toward the at least one cable from the second plurality of cables (LC1...LC4) in case of a failure of the second line terminal equipment (T2),
- transmitting optical signals received from a first cable from the first plurality of cables (SC1...SC16) toward the at least one cable from the second plurality of cables (LC1...LC4) in case of a failure of a second cable from the first plurality of cables (SC1...SC16),
- transmitting optical signals received from the second cable from the first plurality of cables (SC1...SC16) toward the at least one cable from the second plurality of cables (LC1...LC4) in case of a failure of the first cable from the first plurality of cables (SC1...SC16).

3. Equipment (1) in accordance with claim 1 or 2 wherein the first plurality of cables (SC1...SC16) correspond to cables having a length shorter than 370 kms and configured to be arranged in a shallow water region having a depth lower than 1000 meters and located within a 370km range from the shore and the the second plurality of cables (LC1...LC4) corresponds to cables configured to be arranged in deep water region corresponding to a region with a depth higher than 2000 meters and located further away from the shore than the shallow water region.

4. Equipment (1) in accordance with claim 2 wherein the deep water region is located further away than a 50 km range from the shore.

5. Equipment (1) in accordance with one of the previous claims wherein the first, the second, the third and the fourth couplers (C1, C2, C3, C4) are 3dB couplers.

6. Equipment (1) in accordance with one of the previous claims wherein a first and a second cables from the second plurality of cables (LC1, LC2) are associated with the first submarine switching unit (S1), a third and a fourth cables from the second plurality of cables (LC3, LC4) are associated with the second submarine switching unit (S2),
and wherein the first submarine switching unit (S1) comprises:
- a first 4 to 1 switch (SW1) having its output coupled to the first cable from the second plurality of cables,
- a second 4 to 1 switch (SW2) having its output coupled to the second cable from the second plurality of cables,
- a first coupler (C1') coupled to the first coupler (C1) of the terrestrial set (3) via a cable (SC1) from the first plurality of cables associated with a first path and configured for transmitting optical signals received from the terrestrial set (3) toward an input of the first 4 to 1 switch (SW1) and toward an input of a third 4 to 1 switch (SW3) of the second submarine switching unit (S2),
- a second coupler (C2') coupled to the second coupler (C2) of the terrestrial set (3) via a cable (SC2) from the first plurality of cables associated with the first path and configured for transmitting optical signals received from the terrestrial set (3) toward an input of the second 4 to 1 switch (SW2) and toward an input of a fourth 4 to 1 switch (SW4) of the second submarine switching unit (S2),
- a third coupler (C3') coupled to the third coupler (C3) of the terrestrial set (3) via a cable (SC3) from the first plurality of cables associated with the first path and configured for transmitting optical signals received from the terrestrial set (3) toward an input of the first 4 to 1 switch (SW1) and toward an input of the third 4 to 1 switch (SW3) of the second submarine switching unit (S2),
- a fourth coupler (C4') coupled to the fourth coupler (C4) of the terrestrial set (3) via a cable (SC4) from the first plurality of cables associated with the first path and configured for transmitting optical signals received from the terrestrial set (3) toward an input of the second 4 to 1 switch (SW2) and toward an input of a fourth 4 to 1 switch (SW4) of the second submarine switching unit (S2),
and wherein the second submarine switching unit (S2) comprises:
- the third 4 to 1 switch (SW3) having its output coupled to the third cable (LC3) from the second plurality of cables,
- the fourth 4 to 1 switch (SW4) having its output coupled to the fourth cable (LC4) from the second plurality of cables,
- a first coupler (C5') coupled to the first coupler (C5) of the terrestrial set (3) via a cable (SC5) from the first plurality of cables associated with a second path and configured for transmitting optical signals received from the terrestrial set (3) toward an input of the third 4 to 1 switch (SW3) and toward an input of a first 4 to 1 switch (SW3) of the first submarine switching unit (S1),
- a second coupler (C6') coupled to the second coupler (C2) of the terrestrial set (3) via a cable (SC6) from the first plurality of cables associated with the second path and configured for transmitting optical signals received from the terrestrial set (3) toward an input of the fourth 4 to 1 switch (SW4) and toward an input of a second 4 to 1 switch (SW2) of the first submarine switching unit (S1),
- a third coupler (C7') coupled to the third coupler (C3) of the terrestrial set (3) via a cable (SC7) from the first plurality of cables associated with the second path and configured for transmitting optical signals received from the terrestrial set (3) toward an input of the third 4 to 1 switch (SW3) and toward an input of a first 4 to 1 switch (SW1) of the first submarine switching unit (S1),
- a fourth coupler (C8') coupled to the fourth coupler (C4) of the terrestrial set (3) via a cable (SC8) from the second plurality of cables associated with the second path and configured for transmitting optical signals received from the terrestrial set (3) toward an input of the fourth 4 to 1 switch (SW4) and toward an input of a second 4 to 1 switch (SW2) of the first submarine switching unit (S1).

7. Equipment (1) in accordance with claim 6 wherein the couplers (C1'...C8') of the first and second submarine switching units (S1 and S2) are 3dB couplers.

8. Equipment (1) in accordance with one of the previous claims wherein the submarine set (7) comprises additional submarine switching units (S3', S4') associated with respective additional cables (LC3', LC4') from the second plurality of cables and wherein the first and the second submarine switching units (S1', S2') are also configured for forwarding signals received from the terrestrial set (3) toward at least one additional submarine switching unit (S3', S4'), the additional submarine switching units (S3', S4') being configured for receiving optical signals from at least another submarine switching unit (S1'...S4'), forwarding the received signals toward at least another submarine switching unit (S1'...S4') and for transmitting at least a part of the received signals toward the associated additional cable (LC3', LC4') from the second plurality of cables.

9. Equipment (1) in accordance with one of the previous claims wherein the terrestrial set (3) also comprises:
- a first 2 to 1 switch (SW1") linked to the first line terminal equipment (T1) for transmitting optical signals toward the said first line terminal equipment (T1),
- a second 2 to 1 switch (SW2") linked to the first line terminal equipment (T1) for transmitting optical signals toward the said first line terminal equipment (T1),
- a third 2 to 1 switch (SW3") linked to the second line terminal equipment (T2) for transmitting optical signals toward the said second line terminal equipment (T2),
- a fourth 2 to 1 switch (SW4") linked to the second line terminal equipment (T2) for transmitting optical signals toward the said second line terminal equipment (T2),
and wherein the submarine set (7) also comprises:
- a first additional coupler (OC1, OC2) associated with the first submarine switching unit (S1) and configured for transmitting optical signals received from the at least one first cable (LC1, LC2) from the second plurality of cables toward the first and the second line terminal equipments (T1 and T2) via two different cables (SC1...SC8) from the first plurality of cables having two different paths,
- a second additional coupler (OC3, OC4) associated with the second submarine switching unit and configured for transmitting optical signals received from at least one second cable (LC3, LC4) from the second plurality of cables toward the first and the second line terminal equipments (T1 and T2) via two different cables (SC1...SC8) from the first plurality of cables having two different paths.

10. Equipment (1) in accordance with claim 9 wherein the additional couplers (OC1...OC4) of the submarine set (7) are 6 dB couplers.

## Patentansprüche

1. Einrichtung (1) zum Übertragen optischer Signale durch mehrere Unterseeleitungen (LC1...LC4), wobei die Einrichtung (1) Folgendes umfasst:
- mehrere erste Kabel (SC1...SC16),
- mehrere zweite Kabel (LC1...LC4, LC1'...LC4'),
- eine terrestrische Anordnung (3), die Folgendes umfasst:
- eine erste Leitungsabschlusseinrichtung (T1),
- eine zweite Leitungsabschlusseinrichtung (T2),
- einen ersten Koppler (C1), der mit der ersten Leitungsabschlusseinrichtung (T1) über eine erste Lichtleitfaser (F1) verbunden ist und zum Übertragen optischer Signale, die von der ersten Leitungsabschlusseinrichtung (T1) empfangen werden, zu wenigstens einer ersten und einer zweiten Unterseevermittlungseinheit (S1, S2) konfiguriert ist, wobei das Senden zu einer Unterseevermittlungseinheit (S1, S2) über wenigstens zwei unterschiedliche Pfade, die wenigstens zwei unterschiedlichen Kabeln der mehreren ersten Kabel (SC1...SC16) entsprechen, erreicht wird,
- einen zweiten Koppler (C2), der mit der ersten Leitungsabschlusseinrichtung (T1) über eine zweite Lichtleitfaser (F2) verbunden ist und zum Übertragen optischer Signale, die von der ersten Leitungsabschlusseinrichtung (T1) empfangen werden, zu wenigstens der ersten und der zweiten Unterseevermittlungseinheit (S1, S2) konfiguriert ist, wobei das Senden zu einer Unterseevermittlungseinheit (S1, S2) über wenigstens zwei unterschiedliche Pfade, die wenigstens zwei unterschiedlichen Kabeln der mehreren ersten Kabel (SC1...SC16) entsprechen, erreicht wird,
- einen dritten Koppler (C3), der mit der zweiten Leitungsabschlusseinrichtung (T2) über eine dritte Lichtleitfaser (F3) verbunden ist und zum Übertragen optischer Signale, die von der zweiten Leitungsabschlusseinrichtung (T2) empfangen werden, zu wenigstens der ersten und der zweiten Unterseevermittlungseinheit (S1, S2) konfiguriert ist, wobei das Senden zu einer Unterseevermittlungseinheit (S1, S2) über wenigstens zwei unterschiedliche Pfade, die wenigstens zwei Kabeln der mehreren ersten Kabel (SC1...SC16) entsprechen, erreicht wird,
- einen vierten Koppler (C4), der mit der zweiten Leitungsabschlusseinrichtung (T2) über eine vierte Lichtleitfaser (F4) verbunden ist und zum Übertragen optischer Signale, die von der zweiten Leitungsabschlusseinrichtung (T2) empfangen werden, zu wenigstens der ersten und der zweiten Unterseevermittlungseinheit (S1, S2) konfiguriert ist, wobei das Senden zu einer Unterseevermittlungseinheit (S1, S2) über wenigstens zwei unterschiedliche Pfade, die wenigstens zwei unterschiedlichen Kabeln der mehreren ersten Kabel (SC1...SC16) entsprechen, erreicht wird,
- eine Unterseeanordnung (7), die Folgendes umfasst:
- die erste Unterseevermittlungseinheit (S1, S1'), die zum Empfangen optischer Signale von der ersten und der zweiten Leitungsabschlusseinrichtung (T1, T2) über die wenigstens zwei unterschiedlichen Pfade, die den wenigstens zwei unterschiedlichen Kabeln der mehreren ersten Kabel (SC1...SC16) entsprechen, und zum Übertragen optischer Signale, die von wenigstens einem Kabel der mehreren ersten Kabel (SC1...SC16) und von wenigstens einer Leitungsabschlusseinrichtung (T1, T2) empfangen werden, über wenigstens ein erstes Kabel der mehreren zweiten Kabel (LC1...LC4) konfiguriert ist,
- die zweite Unterseevermittlungseinheit (S2, S2'), die zum Empfangen optischer Signale von der ersten und der zweiten Leitungsabschlusseinrichtung (T1, T2) über die wenigstens zwei unterschiedlichen Pfade, die den wenigstens zwei unterschiedlichen Kabeln der mehreren ersten Kabel (SC1...SC16) entsprechen, und zum Übertragen optischer Signale, die von wenigstens einem Kabel der mehreren ersten Kabel (SC2...SC1) und von wenigstens einer Leitungsabschlusseinrichtung (T1, T2) empfangen werden, über wenigstens ein zweites Kabel der mehreren zweiten Kabel (LC1...LC4) konfiguriert ist.

2. Einrichtung (1) nach Anspruch 1, wobei die erste und die zweite Unterseevermittlungseinheit (S1 und S2) konfiguriert sind zum:
- Übertragen optischer Signale, die von der zweiten Leitungsabschlusseinrichtung (T2) empfangen werden, zu dem wenigstens einen Kabel der mehreren zweiten Kabel (LC1...LC4), falls die erste Leitungsabschlusseinrichtung (T1) ausfällt,
- Übertragen optischer Signale, die von der ersten Leitungsabschlusseinrichtung (T1) empfangen werden, zu dem wenigstens einen Kabel der mehreren zweiten Kabel (LC1...LC4), falls die zweite Leitungsabschlusseinrichtung (T2) ausfällt,
- Übertragen optischer Signale, die von einem ersten Kabel der mehreren ersten Kabel (SC1...SC16) empfangen werden, zu dem wenigstens einen Kabel der mehreren zweiten Kabel (LC1...LC4), falls ein zweites Kabel der mehreren ersten Kabel (SC1...SC16) ausfällt,
- Übertragen optischer Signale, die von einem zweiten Kabel der mehreren ersten Kabel (SC1...SC16) empfangen werden, zu dem wenigstens einen Kabel der mehreren zweiten Kabel (LC1...LC4), falls das erste Kabel der mehreren ersten Kabel (SC1...SC16) ausfällt.

3. Einrichtung (1) nach Anspruch 1 oder 2, wobei die mehreren ersten Kabel (SC1...SC16) Kabeln entsprechen, die eine Länge kürzer als 370 km aufweisen und dafür konfiguriert sind, dass sie in einem flacheren Wassergebiet, das eine Tiefe von weniger als 1000 Metern aufweist und sich innerhalb eines Bereichs von 370 km von der Küste befindet, angeordnet sind, und die mehreren zweiten Kabel (LC1...LC4) Kabeln entsprechen, die dafür konfiguriert sind, dass sie in einem tiefen Wassergebiet, das einem Bereich mit einer Tiefe von mehr als 2000 Metern entspricht und sich weiter von der Küste entfernt befindet als das flache Wassergebiet, angeordnet sind.

4. Einrichtung (1) nach Anspruch 2, wobei sich das tiefe Wassergebiet weiter als ein 50-km-Bereich entfernt von der Küste befindet.

5. Einrichtung (1) nach einem der vorhergehenden Ansprüche, wobei der erste, der zweite, der dritte und der vierte Koppler (C1, C2, C3, C4) 3dB-Koppler sind.

6. Einrichtung (1) nach einem der vorhergehenden Ansprüche, wobei ein erstes und ein zweites Kabel der mehreren zweiten Kabel (LC1, LC2) der ersten Unterseevermittlungseinheit (S1) zugeordnet sind, ein drittes und ein viertes Kabel der mehreren zweiten Kabel (LC3, LC4) der zweiten Unterseevermittlungseinheit (S2) zugeordnet sind,
und wobei die erste Unterseevermittlungseinheit (S1) Folgendes umfasst:
- einen ersten 4-zu-1-Umschalter (SW1), dessen Ausgang mit dem ersten Kabel der mehreren zweiten Kabel gekoppelt ist,
- einen zweiten 4-zu-1-Umschalter (SW2), dessen Ausgang mit dem zweiten Kabel der mehreren zweiten Kabel gekoppelt ist,
- einen ersten Koppler (C1'), der mit dem ersten Koppler (C1) der terrestrischen Anordnung (3) über ein Kabel (SC1) der mehreren ersten Kabel, das einem ersten Pfad zugeordnet ist, gekoppelt ist und zum Übertragen optischer Signale, die von der terrestrischen Anordnung (3) empfangen werden, zu einem Eingang des ersten 4-zu-1-Umschalters (SW1) und zu einem Eingang eines dritten 4-zu-1-Umschalters (SW3) der zweiten Unterseevermittlungseinheit (S2) konfiguriert ist,
- einen zweiten Koppler (C2'), der mit dem zweiten Koppler (C2) der terrestrischen Anordnung (3) über ein Kabel (SC2) der mehreren ersten Kabel, das dem ersten Pfad zugeordnet ist, gekoppelt ist und zum Übertragen optischer Signale, die von der terrestrischen Anordnung (3) empfangen werden, zu einem Eingang des zweiten 4-zu-1-Umchalters (SW2) und zu einem Eingang eines vierten 4-zu-1-Umschalters (SW4) der zweiten Unterseevermittlungseinheit (S2) konfiguriert ist,
- einen dritten Koppler (C3'), der mit dem dritten Koppler (C3) der terrestrischen Anordnung (3) über ein Kabel (SC3) der mehreren ersten Kabel, das dem ersten Pfad zugeordnet ist, gekoppelt ist und zum Übertragen optischer Signale, die von der terrestrischen Anordnung (3) empfangen werden, zu einem Eingang des ersten 4-zu-1-Umchalters (SW1) und zu einem Eingang des dritten 4-zu-1-Umschalters (SW3) der zweiten Unterseevermittlungseinheit (S2) konfiguriert ist,
- einen vierten Koppler (C4'), der mit dem vierten Koppler (C4) der terrestrischen Anordnung (3) über ein Kabel (SC4) der mehreren ersten Kabel, das dem ersten Pfad zugeordnet ist, gekoppelt ist und zum Übertragen optischer Signale, die von der terrestrischen Anordnung (3) empfangen werden, zu einem Eingang des zweiten 4-zu-1-Umchalters (SW2) und zu einem Eingang eines vierten 4-zu-1-Umschalters (SW4) der zweiten Unterseevermittlungseinheit (S2) konfiguriert ist,
und wobei die zweite Unterseevermittlungseinheit (S2) Folgendes umfasst:
- den dritten 4-zu-1-Umschalter (SW3), dessen Ausgang mit dem dritten Kabel (LC3) der mehreren zweiten Kabel gekoppelt ist,
- den vierten 4-zu-1-Umschalter (SW4), dessen Ausgang mit dem vierten Kabel (LC4) der mehreren zweiten Kabel gekoppelt ist,
- einen ersten Koppler (C5'), der mit dem ersten Koppler (C5) der terrestrischen Anordnung (3) über ein Kabel (SC5) der mehreren ersten Kabel, das einem zweiten Pfad zugeordnet ist, gekoppelt ist und zum Übertragen optischer Signale, die von der terrestrischen Anordnung (3) empfangen werden, zu einem Eingang des dritten 4-zu-1-Umschalters (SW3) und zu einem Eingang eines ersten 4-zu-1-Umschalters (SW3) der ersten Unterseevermittlungseinheit (S1) konfiguriert ist,
- einen zweiten Koppler (C6'), der mit dem zweiten Koppler (C2) der terrestrischen Anordnung (3) über ein Kabel (SC6) der mehreren ersten Kabel, das dem zweiten Pfad zugeordnet ist, gekoppelt ist und zum Übertragen optischer Signale, die von der terrestrischen Anordnung (3) empfangen werden, zu einem Eingang des vierten 4-zu-1-Umchalters (SW4) und zu einem Eingang eines zweiten 4-zu-1-Umschalters (SW2) der ersten Unterseevermittlungseinheit (S1) konfiguriert ist,
- einen dritten Koppler (C7'), der mit dem dritten Koppler (C3) der terrestrischen Anordnung (3) über ein Kabel (SC7) der mehreren ersten Kabel, das dem zweiten Pfad zugeordnet ist, gekoppelt ist und zum Übertragen optischer Signale, die von der terrestrischen Anordnung (3) empfangen werden, zu einem Eingang des dritten 4-zu-1-Umchalters (SW3) und zu einem Eingang eines ersten 4-zu-1-Umschalters (SW1) der ersten Unterseevermittlungseinheit (S1) konfiguriert ist,
- einen vierten Koppler (C8'), der mit dem vierten Koppler (C4) der terrestrischen Anordnung (3) über ein Kabel (SC8) der mehreren zweiten Kabel, das dem zweiten Pfad zugeordnet ist, gekoppelt ist und zum Übertragen optischer Signale, die von der terrestrischen Anordnung (3) empfangen werden, zu einem Eingang des vierten 4-zu-1-Umchalters (SW4) und zu einem Eingang eines zweiten 4-zu-1-Umschalters (SW2) der ersten Unterseevermittlungseinheit (S1) konfiguriert ist.

7. Einrichtung (1) nach Anspruch 6, wobei die Koppler (C1'...C8') der ersten und der zweiten Unterseevermittlungseinheit (S1 und S2) 3dB-Koppler sind.

8. Einrichtung (1) nach einem der vorhergehenden Ansprüche, wobei die Unterseeanordnung (7) zusätzliche Unterseevermittlungseinheiten (S3', S4'), die entsprechenden zusätzlichen Kabeln (LC3', LC4') der mehreren zweiten Kabel zugeordnet sind, umfasst, und wobei die erste und die zweite Unterseevermittlungseinheit (S1', S2') außerdem zum Weiterleiten von Signalen, die von der terrestrischen Anordnung (3) empfangen werden, zu wenigstens einer zusätzlichen Unterseevermittlungseinheit (S3', S4') konfiguriert sind, wobei die zusätzlichen Unterseevermittlungseinheiten (S3', S4') zum Empfangen optischer Signale von wenigstens einer weiteren Unterseevermittlungseinheit (S1'...S4'), Weiterleiten der empfangenen Signale zu wenigstens einer weiteren Unterseevermittlungseinheit (S1'...S4') und zum Übertragen wenigstens eines Teils der empfangenen Signale zu dem zugeordneten zusätzlichen Kabel (LC3', LC4') der mehreren zweiten Kabel konfiguriert sind.

9. Einrichtung (1) nach einem der vorhergehenden Ansprüche, wobei die terrestrische Anordnung (3) außerdem Folgendes umfasst:
- einen ersten 2-zu-1-Umschalter (SW1"), der mit der ersten Leitungsabschlusseinrichtung (T1) zum Übertragen optischer Signale zu der ersten Leitungsabschlusseinrichtung (T1) verbunden ist,
- einen zweiten 2-zu-1-Umschalter (SW2"), der mit der ersten Leitungsabschlusseinrichtung (T1) zum Übertragen optischer Signale zu der ersten Leitungsabschlusseinrichtung (T1) verbunden ist,
- einen dritten 2-zu-1-Umschalter (SW3"), der mit der zweiten Leitungsabschlusseinrichtung (T2) zum Übertragen optischer Signale zu der zweiten Leitungsabschlusseinrichtung (T2) verbunden ist,
- einen vierten 2-zu-1-Umschalter (SW4"), der mit der zweiten Leitungsabschlusseinrichtung (T2) zum Übertragen optischer Signale zu der zweiten Leitungsabschlusseinrichtung (T2) verbunden ist,
und wobei die Unterseeanordnung (7) außerdem Folgendes umfasst:
- einen ersten zusätzlichen Koppler (OC1, OC2), der der ersten Unterseevermittlungseinheit (S1) zugeordnet ist und zum Übertragen optischer Signale, die von dem wenigstens einen ersten Kabel (LC1, LC2) der mehreren zweiten Kabel empfangen werden, zu der ersten und der zweiten Leitungsabschlusseinrichtung (T1 und T2) über zwei unterschiedliche Kabel (SC1...SC8) der mehreren ersten Kabel, die zwei unterschiedliche Pfade aufweisen, konfiguriert ist,
- einen zweiten zusätzlichen Koppler (OC3, OC4), der der zweiten Unterseevermittlungseinheit zugeordnet ist und zum Übertragen optischer Signale, die von dem wenigstens einen zweiten Kabel (LC3, LC4) der mehreren zweiten Kabel empfangen werden, zu der ersten und der zweiten Leitungsabschlusseinrichtung (T1 und T2) über zwei unterschiedliche Kabel (SC1...SC8) der mehreren ersten Kabel, die zwei unterschiedliche Pfade aufweisen, konfiguriert ist.

10. Einrichtung (1) nach Anspruch 9, wobei die zusätzlichen Koppler (OC1...OC4) der Unterseeanordnung (7) 6dB-Koppler sind.

## Revendications

1. Équipement (1) pour transmettre des signaux optiques à travers une pluralité de câbles sous-marins (LC1...LC4), ledit équipement (1) comprenant :
- une première pluralité de câbles (SC1...SC16),
- une deuxième pluralité de câbles (LC1...LC4, LC1'...LC4'),
- un ensemble terrestre (3) comprenant :
- un premier équipement terminal de ligne (T1),
- un deuxième équipement terminal de ligne (T2),
- un premier coupleur (C1) relié au premier équipement terminal de ligne (T1) par une première fibre optique (F1) et configuré pour transmettre des signaux optiques reçus à partir du premier équipement terminal de ligne (T1) vers au moins une première et une deuxième unité de commutation sous-marine (S1, S2), la transmission vers une unité de commutation sous-marine (S1, S2) étant réalisée via au moins deux chemins différents correspondant à au moins deux câbles différents de la première pluralité de câbles (SC1...SC16),
- un deuxième coupleur (C2) relié au premier équipement terminal de ligne (T1) par une deuxième fibre optique (F2) et configuré pour transmettre des signaux optiques reçus à partir du premier équipement terminal de ligne (T1) vers au moins les première et deuxième unités de commutation sous-marines (S1, S2), la transmission vers une unité de commutation sous-marine (S1, S2) étant réalisée via au moins deux chemins différents correspondant à au moins deux câbles différents de la première pluralité de câbles (SC1...SC16),
- un troisième coupleur (C3) relié au deuxième équipement terminal de ligne (T2) par une troisième fibre optique (F3) et configuré pour transmettre des signaux optiques reçus à partir du deuxième équipement terminal de ligne (T2) vers au moins les première et deuxième unités de commutation sous-marines (S1, S2), la transmission vers une unité de commutation sous-marine (S1, S2) étant réalisée via au moins deux chemins différents correspondant à au moins deux câbles de la première pluralité de câbles (SC1...SC16),
- un quatrième coupleur (C4) relié au deuxième équipement terminal de ligne (T2) par une quatrième fibre optique (F4) et configuré pour transmettre des signaux optiques reçus à partir du deuxième équipement terminal de ligne (T2) vers au moins les première et deuxième unités de commutation sous-marines (S1, S2), la transmission vers une unité de commutation sous-marine (S1, S2) étant réalisée via au moins deux chemins différents correspondant à au moins deux câbles différents de la première pluralité de câbles (SC1... SC16),
- un ensemble sous-marin (7) comprenant :
- la première unité de commutation sous-marine (S1, S1') configurée pour recevoir des signaux optiques à partir des premier et deuxième équipements terminaux de ligne (T1, T2) via les au moins deux chemins différents correspondant aux au moins deux câbles différents de la première pluralité de câbles (SC1...SC16) et pour transmettre des signaux optiques reçus à partir d'au moins un câble de la première pluralité de câbles (SC1...SC16) et d'au moins un équipement terminal de ligne (T1, T2) par au moins un premier câble de la deuxième pluralité de câbles (LC1...LC4),
- la deuxième unité de commutation sous-marine (S2, S2') configurée pour recevoir des signaux optiques à partir des premier et deuxième équipements terminaux de ligne (T1, T2) via les au moins deux chemins différents correspondant aux au moins deux câbles différents de la première pluralité de câbles (SC1...SC16) et pour transmettre des signaux optiques reçus à partir d'au moins un câble de la première pluralité de câbles (SC1...SC16) et d'au moins un équipement terminal de ligne (T1, T2) par au moins un deuxième câble de la deuxième pluralité de câbles (LC1...LC4) .

2. Équipement (1) selon la revendication 1, dans lequel les première et deuxième unités de commutation sous-marines (S1 et S2) sont configurées pour :
- transmettre des signaux optiques reçus à partir du deuxième équipement terminal de ligne (T2) vers l'au moins un câble de la deuxième pluralité de câbles (LC1...LC4) en cas de défaillance du premier équipement terminal de ligne (T1),
- transmettre des signaux optiques reçus à partir du premier équipement terminal de ligne (T1) vers l'au moins un câble de la deuxième pluralité de câbles (LC1...LC4) en cas de défaillance du deuxième équipement terminal de ligne (T2),
- transmettre des signaux optiques reçus à partir d'un premier câble de la première pluralité de câbles (SC1...SC16) vers l'au moins un câble de la deuxième pluralité de câbles (LC1...LC4) en cas de défaillance d'un deuxième câble de la première pluralité de câbles (SC1...SC16),
- transmettre des signaux optiques reçus à partir du deuxième câble de la première pluralité de câbles (SC1...SC16) vers l'au moins un câble de la deuxième pluralité de câbles (LC1...LC4) en cas de défaillance du premier câble de la première pluralité de câbles (SC1...SC16).

3. Équipement (1) selon la revendication 1 ou 2, dans lequel la première pluralité de câbles (SC1...SC16) correspond à des câbles ayant une longueur inférieure à 370 km et configurés pour être disposés dans une région d'eau peu profonde ayant une profondeur inférieure à 1000 mètres et située dans une plage de 370 km de la côte et la deuxième pluralité de câbles (LC1...LC4) correspond à des câbles configurés pour être disposés dans une région d'eau profonde correspondant à une région ayant une profondeur supérieure à 2000 mètres et située plus loin de la côte que la région d'eau peu profonde.

4. Équipement (1) selon la revendication 2, dans lequel la région d'eau profonde est située à une distance supérieure à 50 km de la côte.

5. Équipement (1) selon l'une des revendications précédentes, dans lequel le premier, le deuxième, le troisième et le quatrième coupleur (C1, C2, C3, C4) sont des coupleurs 3 dB.

6. Équipement (1) selon l'une des revendications précédentes, dans lequel un premier et un deuxième câble de la deuxième pluralité de câbles (LC1, LC2) sont associés à la première unité de commutation sous-marine (S1), un troisième et un quatrième câble de la deuxième pluralité de câbles (LC3, LC4) sont associés à la deuxième unité de commutation sous-marine (S2),
et dans lequel la première unité de commutation sous-marine (S1) comprend :
- un premier commutateur 4 à 1 (SW1) dont la sortie est couplée au premier câble de la deuxième pluralité de câbles,
- un deuxième commutateur 4 à 1 (SW2) dont la sortie est couplée au deuxième câble de la deuxième pluralité de câbles,
- un premier coupleur (C1') couplé au premier coupleur (C1) de l'ensemble terrestre (3) via un câble (SC1) de la première pluralité de câbles associé à un premier chemin et configuré pour transmettre des signaux optiques reçus à partir de l'ensemble terrestre (3) vers une entrée du premier commutateur 4 à 1 (SW1) et vers une entrée d'un troisième commutateur 4 à 1 (SW3) de la deuxième unité de commutation sous-marine (S2),
- un deuxième coupleur (C2') couplé au deuxième coupleur (C2) de l'ensemble terrestre (3) via un câble (SC2) de la première pluralité de câbles associé au premier chemin et configuré pour transmettre des signaux optiques reçus à partir de l'ensemble terrestre (3) vers une entrée du deuxième commutateur 4 à 1 (SW2) et vers une entrée d'un quatrième commutateur 4 à 1 (SW4) de la deuxième unité de commutation sous-marine (S2),
- un troisième coupleur (C3') couplé au troisième coupleur (C3) de l'ensemble terrestre (3) via un câble (SC3) de la première pluralité de câbles associé au premier chemin et configuré pour transmettre des signaux optiques reçus à partir de l'ensemble terrestre (3) vers une entrée du premier commutateur 4 à 1 (SW1) et vers une entrée du troisième commutateur 4 à 1 (SW3) de la deuxième unité de commutation sous-marine (S2),
- un quatrième coupleur (C4') couplé au quatrième coupleur (C4) de l'ensemble terrestre (3) via un câble (SC4) de la première pluralité de câbles associé au premier chemin et configuré pour transmettre des signaux optiques reçus à partir de l'ensemble terrestre (3) vers une entrée du deuxième commutateur 4 à 1 (SW2) et vers une entrée d'un quatrième commutateur 4 à 1 (SW4) de la deuxième unité de commutation sous-marine (S2),
et dans lequel la deuxième unité de commutation sous-marine (S2) comprend :
- le troisième commutateur 4 à 1 (SW3) ayant sa sortie couplée au troisième câble (LC3) de la deuxième pluralité de câbles,
- le quatrième commutateur 4 à 1 (SW4) ayant sa sortie couplée au quatrième câble (LC4) de la deuxième pluralité de câbles,
- un premier coupleur (C5') couplé au premier coupleur (C5) de l'ensemble terrestre (3) via un câble (SC5) de la première pluralité de câbles associé à un deuxième chemin et configuré pour transmettre des signaux optiques reçus à partir de l'ensemble terrestre (3) vers une entrée du troisième commutateur 4 à 1 (SW3) et vers une entrée d'un premier commutateur 4 à 1 (SW3) de la première unité de commutation sous-marine (S1),
- un deuxième coupleur (C6') couplé au deuxième coupleur (C2) de l'ensemble terrestre (3) via un câble (SC6) de la première pluralité de câbles associé au deuxième chemin et configuré pour transmettre des signaux optiques reçus à partir de l'ensemble terrestre (3) vers une entrée du quatrième commutateur 4 à 1 (SW4) et vers une entrée d'un deuxième commutateur 4 à 1 (SW2) de la première unité de commutation sous-marine (S1),
- un troisième coupleur (C7') couplé au troisième coupleur (C3) de l'ensemble terrestre (3) via un câble (SC7) de la première pluralité de câbles associé au deuxième chemin et configuré pour transmettre des signaux optiques reçus à partir de l'ensemble terrestre (3) vers une entrée du troisième commutateur 4 à 1 (SW3) et vers une entrée d'un premier commutateur 4 à 1 (SW1) de la première unité de commutation sous-marine (S1),
- un quatrième coupleur (C8') couplé au quatrième coupleur (C4) de l'ensemble terrestre (3) via un câble (SC8) de la deuxième pluralité de câbles associé au deuxième chemin et configuré pour transmettre des signaux optiques reçus à partir de l'ensemble terrestre (3) vers une entrée du quatrième commutateur 4 à 1 (SW4) et vers une entrée d'un deuxième commutateur 4 à 1 (SW2) de la première unité de commutation sous-marine (S1).

7. Équipement (1) selon la revendication 6, dans lequel les coupleurs (C1' ...C8') des première et deuxième unités de commutation sous-marines (S1 et S2) sont des coupleurs 3 dB.

8. Équipement (1) selon l'une des revendications précédentes, dans lequel l'ensemble sous-marin (7) comprend des unités de commutation sous-marines supplémentaires (S3', S4') associées à des câbles supplémentaires respectifs (LC3', LC4') de la deuxième pluralité de câbles et dans lequel les première et deuxième unités de commutation sous-marines (S1', S2') sont également configurées pour transmettre des signaux reçus à partir de l'ensemble terrestre (3) vers au moins une unité de commutation sous-marine supplémentaire (S3', S4'), les unités de commutation sous-marines supplémentaires (S3', S4') étant configurées pour recevoir des signaux optiques à partir d'au moins une autre unité de commutation sous-marine (S1'...S4'), transférer les signaux reçus vers au moins une autre unité de commutation sous-marine (S1'...S4') et pour transmettre au moins une partie des signaux reçus vers le câble supplémentaire associé (LC3', LC4') de la deuxième pluralité de câbles.

9. Équipement (1) selon l'une des revendications précédentes dans lequel l'ensemble terrestre (3) comprend également :
- un premier commutateur 2 à 1 (SW1") relié au premier équipement terminal de ligne (T1) pour transmettre des signaux optiques vers ledit premier équipement terminal de ligne (T1),
- un deuxième commutateur 2 à 1 (SW2") relié au premier équipement terminal de ligne (T1) pour transmettre des signaux optiques vers ledit premier équipement terminal de ligne (T1),
- un troisième commutateur 2 à 1 (SW3") relié au deuxième équipement terminal de ligne (T2) pour transmettre des signaux optiques vers ledit deuxième équipement terminal de ligne (T2),
- un quatrième commutateur 2 à 1 (SW4") relié au deuxième équipement terminal de ligne (T2) pour transmettre des signaux optiques vers ledit deuxième équipement terminal de ligne (T2),
et dans lequel l'ensemble sous-marin (7) comprend également :
- un premier coupleur supplémentaire (OC1, OC2) associé à la première unité de commutation sous-marine (S1) et configuré pour transmettre des signaux optiques reçus à partir de l'au moins un premier câble (LC1, LC2) de la deuxième pluralité de câbles vers les premier et deuxième équipements terminaux de ligne (T1 et T2) via deux câbles différents (SC1...SC8) de la première pluralité de câbles ayant deux chemins différents,
- un deuxième coupleur supplémentaire (OC3, OC4) associé à la deuxième unité de commutation sous-marine et configuré pour transmettre des signaux optiques reçus à partir d'au moins un deuxième câble (LC3, LC4) de la deuxième pluralité de câbles vers les premier et deuxième équipements terminaux de ligne (T1 et T2) via deux câbles différents (SC1...SC8) de la première pluralité de câbles ayant deux chemins différents.

10. Équipement (1) selon la revendication 9, dans lequel les coupleurs supplémentaires (OC1...OC4) de l'ensemble sous-marin (7) sont des coupleurs de 6 dB.
